# EUROPEAN PATENT APPLICATION

(11) **EP 0 860 815 A1**
(43) Date of publication of application: **26.08.1998**
(21) Application number: 98102745.1
(22) Date of filing: 17.02.1998
(51) Int. Cl.: G11B 5/48

(54) **Short-moment-arm head assembly and gimbal for floppy disk drives**

(30) Priority: 21.02.1997 US 801847
(71) Applicant: O.R. Technology, Inc., Champbell, California 95008 (US)
(72) Inventor: Tzur, Israel, Longmont, Colorado 80503 (US); Perry, David M., Lafayette, Colorado 80026 (US); Cannon, Neil P., Boulder, Colorado 80304 (US); Paquet, David W., Louisville, Colorado 80027 (US); Boeckner, James W., Jr., Broomfield, Colorado 80020 (US)
(74) Representative: Blumbach, Kramer & Partner GbR

(57) **Abstract**

A microfloppy disk drive embodiment of the present invention comprises a low-profile magnetic head slider (36) mounted directly to a Whitney-type flexure (34). A suspension arm (32) with a Z-bend (44) in its distal end is configured to clear a cartridge shutter, and such further allows an attachment at the front end of the flexure (32) to the metal suspension (34). The load force is applied to a dimple (54) on the center of a flexure finger. In contrast to the prior art, the load point position and the Whitney-like flexure plane inside the shutter opening are substantially nearer to the disk media than they are to the top surface of the shutter.

## Description

### BACKGROUND OF THE INVENTION

### 1. Field of the Invention

The invention relates generally to computer data storage systems and more specifically to devices to reduce the sensitivity of a floppy disk drive to media friction variations that can cause magnetic head squeal and pitch modulation.

### 2. Description of the Prior Art

Double-sided recording on a floppy disk has been used to increase capacity and facilitate data transfer operations. As with most single-sided recording, pressure is required on the opposing side to urge the disk against the head. A typical double-sided contact system is disclosed by United States Patent 4,151,573, which describes a fixed head on one side of a disk and a cantilevered, gimbal-mounted, movable head on the other side. In operation, the disk is confined against the fixed head, despite perturbations in movement of the disk, by the pressure of the movable head. Typically, the disk is contained within a protective plastic jacket. A shutter on the jacket is moved aside to reveal a windowed opening through which the heads can contact the disk. For double-sided recording the heads are ordinarily in direct opposition because the windows are small. Sometimes the heads have a slight radial offset with one another to avoid flux interaction.

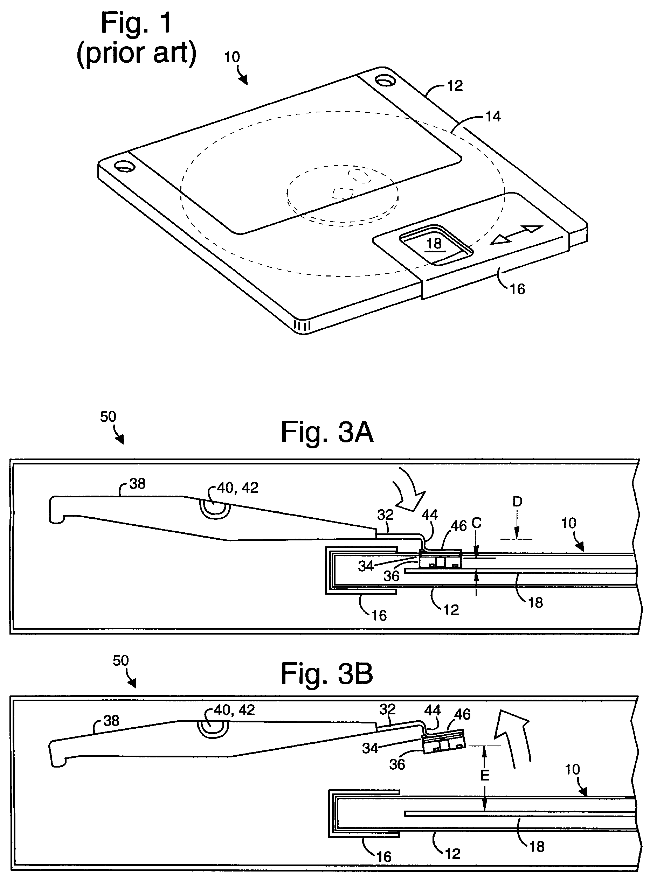

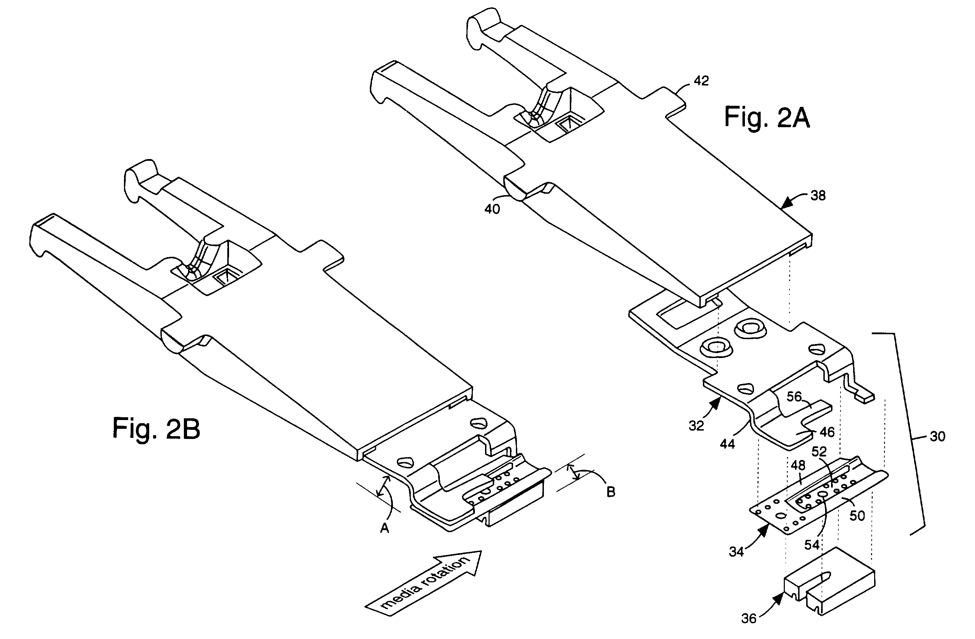

The standard 3.5" microfloppy disk is now ubiquitous and familiar to most lay persons in the United States. Recently, the so-called high capacity 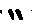 LS-120*"* drive and diskette has been introduced which uses a cartridge and shutter about the same as conventional floppies. Such disks, e.g., a disk 10 in Fig. 1, have a hard plastic envelope 12 that protects a flexible media 14 inside. A metal shutter 16 allows access to the media 14 through a hole 18 in the plastic that is revealed by sliding the shutter 16 to one side against internal spring pressure. In conventional disk drives, a magnetic head is flexibly mounted to a carriage using a resilient gimbal such that the head can follow the ups and downs on the surface of the medium to keep close contact. The carriage moves radial to the disk medium and carries the magnetic heads horizontally that are pressed against medium by the resilience of the gimbal. Such disks and their drives have experienced instability problems that can manifest as a squeal. This problem is generally caused by the relatively long moment arms created by not having the plane of the pivoted upper slider flexure as close as possible to the media. The higher rotation speeds of the newer technologies only exacerbate the squealing problem.

Albrecht, et. al., describes in United States Patent 5,251,844, issued Oct. 12, 1993, a flexure that permits an upper plate to pivot, or "gimbal", with two degrees of freedom with respect to a post, e.g., pitch and roll. The pivoting occurs about a dimple that protrudes from a surface of a leaf spring, through an opening in the flexure, and into a recessed region of the upper plate. The leaf spring prevents the upper plate from rotating.

Conventional floppy disk mechanisms include upper plates, flexures, leaf springs, and pivots that are similar to those originally appearing in IBM 3370 and 3380/3390 direct access storage device (DASD) head suspension assemblies. The earlier IBM Model 3370 disk drive, announced in 1973, used so-called Whitney head technology, and the first thin film disk. Such thin film improved head and media performance, without lowering the flying heights. For further description of the head suspension assembly of the IBM 3380/3390 DASD, see United States Patent 4,167,765, and Aoyagi et al., "Integrated Head Suspension Assembly", IBM TECHNICAL DISCLOSURE BULLETIN, Vol. 32, No. 3A, August 1989, pp. 175-176.

Conventional microfloppy cartridges present a relatively deep well through an opening in the shutter 16 and the hole 18 that a magnetic head attached to an actuator arm in a drive must drop into and contact the media 14, e.g., from either side. The typical prior art head assembly has a gimbal on which is attached a mounting block that gains the needed extension. A magnetic read/write head is then attached at the distal end of the mounting block. A rather long moment arm is thereby setup between the plane of the gimbal and the contact point between the media 14 and the head. Such long moment arms have been responsible for audible squealing and pitch variations that are energized by the rubbing friction between the rotating media 14 and the stationary head, e.g., similar in effect to the tone produced by rubbing a wet finger around the rim of a wine glass.

Anderson, et al., explain in United States Patent 4,535,374, issued August 13, 1985, that each head in a magnetic disk storage system is supported and connected to a flexure. Such flexures are typically connected to the free end of a predominantly flat, cantilevered suspension arm on a movable carriage associated with the disk. The suspension arm is conventionally spring-loaded to provide a vertical loading force on the head that urges the head to the disk surface.

Robert B. Watrous observed in United States Patent 4,167,765, issued September 11, 1979, that in order to have a magnetic transducer closely follow a moving disk surface, the head slider and its supporting suspension should be able to pitch around a first axis and to roll about a second axis orthogonal to the first axis. He constructed the so-called Whitney magnetic head/arm assembly for IBM with a suspension for an air bearing head slider that included a single piece rectangular flexure with two parallel flexible narrow fingers, a relatively stiff cross leg, and a central finger to which the slider was attached. A combined load beam-spring element was formed from a single piece and fastened to the flexure so as to engage a load pivot formed with the central finger. The substantially triangular loadbeam/spring element had flanges formed along its length to concentrate the resilient spring action at the opposite ends and to stiffen the remaining portion of the length. The stiff cross leg section of the rectangular flexure was crimped to detent the central finger to keep the attached slider parallel but elevated to accommodate the load pivot height from the load beam.

### SUMMARY OF THE PRESENT INVENTION

It is therefore an object of the present invention to provide a floppy disk drive with reduced or eliminated squeal due to disk and head rubbing friction on a long head-flexure moment arm.

It is another object of the present invention to provide a top slider gimbal assembly with better control in a floppy disk drive of the head pitch and roll vibrations that can be caused by disk and head rubbing friction on a long head-flexure moment arm.

Briefly, a floppy disk drive embodiment of the present invention comprises a low-profile magnetic head slider mounted directly to a Whitney-type flexure. A suspension arm with a Z-bend in it to clear a cartridge shutter allows an attachment at the front end of the flexure to the metal suspension. The load force is applied to a dimple on the center of a flexure finger. The load point position and the Whitney-like flexure plane inside the shutter opening are substantially nearer to the disk media than they are to the top surface of the shutter.

An advantage of the present invention is that a floppy disk drive is provided that operates the Whitney-gimbal assembly and its pivot and flexure substantially closer to the media surface and thus shortens the moment arm setup.

A further advantage of the present invention is that the required minimum height swept out during cartridge insertion and ejection by the upper arm is significantly decreased. And yet the upper slider is assured to clear the top surface of the cartridge shutter. Such an upper arm configuration is very advantageous in low-profile drives used by portable computers.

A still further advantage of the present invention is that the LS-120 and other high capacity drives benefit from the increased stability afforded and this increased stability can be used to decrease the load force and thus reduce media and slider wear.

These and many other objects and advantages of the present invention will no doubt become obvious to those of ordinary skill in the art after having read the following detailed description of the preferred embodiments which are illustrated in the various drawing figures.

### IN THE DRAWINGS

Fig. 1 is a perspective view of a prior art floppy diskette;
Fig. 2A is an exploded assembly diagram of the head slider, gimbal flexure, and suspension assembly embodiment of the present invention and a conventional actuator arm;
Fig. 2B is a perspective view of the components of Fig. 2A in a single assembly, and the preferred direction of disk media rotation relative to the orientation of the gimbal flexure leaf springs is represented by an arrow;
Fig. 3A is a diagram representing a microfloppy disk drive embodiment of the present invention shown in cross section with the head slider, gimbal flexure, and suspension assembly of Figs. 2A and 2B in contact with and loaded to access the floppy diskette of Fig. 1; and
Fig. 3B is another cross sectional diagram representing the microfloppy disk drive embodiment of the present invention shown in Fig. 3A with the head slider, gimbal flexure, and suspension assembly of Figs. 2A and 2B withdrawn and unloaded to allow the floppy diskette of Fig. 1 to either be inserted or ejected.

### DETAILED DESCRIPTION OF THE PREFERRED EMBODIMENTS

Figs. 2A and 2B illustrate a suspended head-gimbal assembly embodiment of the present invention, referred to herein by the general reference numeral 30. The suspended head-gimbal assembly 30 comprises a suspension 32, a Whitney-type gimbal flexure 34, and a low-profile magnetic head slider 36. These are all preferably adapted to fit a conventional floppy disk drive actuator. For example, an actuate arm 38 has a pair of pivots 40 and 42 that allow it to teeter-totter on an actuator carriage in a microfloppy drive. The suspended head-gimbal assembly 30 mounts to the distal end of the actuator arm 38 and the teeter-totter action allows the suspended head-gimbal assembly 30 to be raised high enough to clear the shutter door of a microfloppy cartridge during insertion or ejection. Once the microfloppy cartridge is in place and its shutter door opened, the suspended head-gimbal assembly 30 is dropped into contact with the floppy disk media by turning the actuator arm 38 on its pivots 40 and 42.

A Z-bend 44 in the suspension 32 places the plane of a gimbal attachment 46 at a minimal elevation above the floppy disk media. Such elevation is critical, and comparatively far less than conventional designs.

The Whitney-type gimbal flexure 34 comprises a pair of leaf springs 48 and 50 and a central finger 52 with a load dimple 54. A load finger 56 that extends from the gimbal attachment 46 bears on the dimple 54 when the slider 36 is loaded on the floppy disk media. The leaf springs 48 and 50 allow such loading to occur easily and permit relatively free but controlled pitching and rolling of the slider 36 in its ride on the media. The Whitney-type gimbal flexure 34 is preferably oriented such that the leaf springs 48 and 50 are placed in tension by the direction of rotation and friction of the slider with the floppy disk media.

Fig. 2B represents the amount in elevation that the plane of gimbal flexure is dropped by a dimension 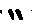 A*"*. The thickness of the slider 36 is represented by a dimension 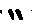 B*"*. The Z-bend 44 therefore permits dimension 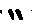 B*"* to be minimized and yet allows dimensions 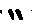 A*"* and 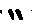 B*"* to be sufficiently large to provide for the arm 38 and the attachment to suspension 32 to clear the perimeter of the microfloppy disk shutter opening. In the prior art, dimension 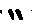 B*"* is substantially larger, and media friction combined with the larger moment arm creates an instability and squeal to develop when the slider 36 yaws and pitches on the load dimple 54.

One way that the present invention differs from the prior art is that the magnetic head slider 36 is attached directly to the Whitney-type flexure 34. The conventional intervening extension block is not needed in order to reach the head deep enough through the hole 18 in the diskette 10 to access the media 14. In the present invention, the Whitney-type flexure 34 accompanies the magnetic head slider 36 into the recesses of the diskette 10.

In Fig. 3A, a microfloppy disk drive embodiment of the present invention, referred to herein by the general reference numeral 50, has the microfloppy diskette 10 of Fig. 1 already installed. The arm 38 has been rotated forward on pivots 40 and 42 to bring the slider 36 into contact with the disk media 18. Most such drives will be double-sided, but Figs. 3A and 3B do not show the other head assembly in order to keep the illustration from becoming too cluttered. When loaded in this way, the gimbal 34 attached to gimbal attachment 46 has a relatively low altitude above the disk media 18, as represented by a dimension 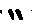 C*"*. It is from this altitude that the slider pitches and rolls, and so dimension 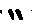 C*"* represents the length of the moment arm that can be involved in squealing. A dimension 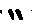 D*"* represents the typical altitude that conventional disk drives position their gimbals. Such higher altitudes are the result of thicker high profile sliders, and/or elevator blocks placed intermediate to the slider and gimbal. The prior art uses such a configuration to provide for a clearance between the arm and the shutter 16.

In Fig. 3B, the arm 38 has been rotated back on pivots 40 and 42 to raise the slider 36 away from contact with the disk media 18, and high enough to clear the shutter 16 when the microfloppy diskette 10 is withdrawn. The altitude that the slider 36 is lifted is represented by a dimension 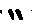 E*"*.

Although the present invention has been described in terms of the presently preferred embodiments, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A head-gimbal-suspension assembly for a floppy disk drive, comprising:
a Whitney-type gimbal flexure generally flat and rectangular in shape and having a central flexible flat finger extended from a media rotation downstream end and a pair of leaf springs outboard of said finger extended from said media rotation downstream end to an opposite upstream end;
a low-profile magnetic head slider directly attached to a distal end of said flexible flat finger; and
a suspension having a Z-bend with a first end with a higher elevation relative to the slider for attachment to an actuator arm and a second end with a lower elevation than said first end relative to the slider with a gimbal attachment that supports said upstream end of the gimbal flexure;
wherein, said pair of leaf springs are placed in tension during operation; and
wherein, a foreshortened moment arm is provided between the gimbal flexure and a media contact side of the low-profile magnetic head slider to control squeal.

2. The assembly of claim 1, wherein:
said foreshortened moment arm is less than a depth of entry from a shutter window on a mating floppy diskette to a magnetic flexible disk media within.

3. A floppy disk drive system, comprising:
an actuator arm with pivots that allow clearance for the insertion and ejection of a microfloppy diskette with a rigid body and a shutter window access to a flexible disk media disposed within;
a Whitney-type gimbal flexure generally flat and rectangular in shape and having a central flexible flat finger extended from a first end and a pair of leaf springs outboard of said finger extended from said first end to a second end;
a low-profile magnetic head slider directly attached to a distal end of said flexible flat finger; and
a suspension having a Z-bend with a first end with a higher elevation relative to the slider attached to a distal end of the actuator arm, and a second end with a lower elevation than said first end relative to the slider with a gimbal attachment that supports said second end of the gimbal flexure.

4. The system of claim 3, wherein;
said flexible disk media is rotated in a direction that will place said pair of leaf springs in tension during operation.

5. The system of claim 3, wherein;
wherein, a foreshortened moment arm is provided between the gimbal flexure and a media contact side of the low-profile magnetic head slider to control squeal.

6. The system of claim 3, wherein;
the suspension includes a load finger that extends from said second end toward said first end of the gimbal; and
the gimbal includes on said central finger a load dimple that bears on said load finger during operation.

7. A method for limiting audible squeal and head pitch and roll vibrations in head-gimbal assemblies for floppy disk drives, the method comprising:
positioning a two-degrees of freedom pivot point of a flexure to operate in the space between a shutter window opening and a flexible disk media in a hard floppy diskette envelope, and that provides for a foreshortened moment arm between said pivot point and a media contact with a low-profile magnetic head slider attached to said flexure, wherein is provided a means of controlling pitch and roll vibration and audible squeal.
